# EUROPÄISCHE PATENTANMELDUNG

(11) **EP 0 989 655 A2**
(43) Veröffentlichungstag der Anmeldung: **29.03.2000**
(21) Anmeldenummer: 99117790.8
(22) Anmeldetag: 09.09.1999
(51) Int. Cl.: H02K 7/06, H02K 7/116

(54) **Elektromotorischer Linearantrieb**

(30) Priorität: 21.09.1998 DE 29816884 U
(71) Anmelder: Dewert Antriebs- und Systemtechnik GmbH & Co. KG, D-32278 Kirchlengern (DE)
(72) Erfinder: Bokämper, Ralf, 32312 Lübbecke (DE); Roither, Andreas, 33647 Bielefeld (DE)
(74) Vertreter: Stracke, Alexander, Dipl.-Ing.

(57) **Zusammenfassung**

Ein elektromotorischer Linearantrieb zum Antrieb eines Möbelteiles, der mit einer rotierend antreibbaren Spindel und einer darauf aufgesetzten Spindelmutter ausgerüstet ist und bei dem die Spindel von einem Schneckentrieb angetrieben wird, dessen Schnecke aufden Motorzapfen eines Elektromotors aufgekeilt ist, soll so gestaltet werden, daß der durch Kräfte und ggf. Wärme hervorgerufene Verschleiß des mit der Schnecke in Eingriff stehende Schneckenrades vermindert wird oder daß mittels des Linearantriebes höhere Kräfte übertragen können.

Erfinungsgemäß steht die Schnecke (12) des Schneckentriebes mit wenigstens zwei achsparallelen Schneckenrädern (13, 14) in Eingriff, wobei die Anordnung symmetrisch zur Drehachse der Schnecke (12) steht. Die Schneckenräder (13, 14) stehen bevorzugt um einen Winkel von 180° zueinander. Jedes Schneckenrad (13, 14) ist mit einem Stirnrad (15, 16) verbunden, welches mit dem jeweiligen Stirnrad des anderen Schneckenrades in Eingriff steht.

Der erfindungsgemäße Linearantrieb ist besonders zum Verstellen von Möbelbauteilen geeignet.

## Beschreibung

Die vorliegende Erfindung betrifft einen elektromotorischen Linearantrieb, insbesondere Möbelantrieb mit einer rotierend antreibbaren Spindel auf die eine das Abtriebsglied bildende und gegen Verdrehung gesicherte Spindelmutter aufgesetzt ist, und mit einem Schneckentrieb, dessen Schnecke auf den Motorzapfen eines Elektromotors aufgekeilt ist. Der in Frage kommende Linearantrieb ist in vielen Ausführungen für die verschiedensten Einsatzzwecke bekannt. Der Linearantrieb kann ein einfacher Antrieb sein, d.h., mit einem Elektromotor und mit einer Spindel und einer Spindelmutter ausgerüstet sein, oder auch ein Doppelantrieb sein, der mit zwei Elektromotoren und zwei Gewindespindeln und zwei Spindelmuttern ausgerüstet ist, die in einem gemeinsamen Gehäuse angeordnet sind. Es handelt sich außerdem um Kleinantriebe mit Leistungen unter 1 KW.

Bei den bisher bekannten Ausführungen besteht die Schnecke des Schneckentriebes aus Stahl, während das damit in Eingriff stehende Schneckenrad aus Kunststoff besteht. Bei diesen an sich bewährten Ausführungen hat sich herausgestellt, daß sich der Motorzapfen der darauf aufgesetzten Schnecke unter Belastung, wenn auch geringfügig, verbiegt. Dies führt dazu, daß die Überdeckung zwischen Schnecke und dem Schneckenrad abnimmt und die Flächenpressung zunimmt. Sinngemäß werden die Flanken des Schneckenrades abgerieben bzw. zerquetscht. Dieser Effekt wird noch dadurch begünstigt, daß sich im Betrieb des Linearantriebes der Motorzapfen des Elektromotors erwärmt.

Der vorliegenden Erfindung liegt die Aufgabe zugrunde, einen elektromotorischen Linearantrieb der eingangs näher beschriebenen Art so zu gestalten, daß der durch Kräfte und gegebenenfalls Wärme hervorgerufene Verschleiß des mit der Schnecke in Eingriff stehenden Schneckenrades vermindert wird bzw. höhere Kräfte übertragen werden können.

Die gestellte Aufgabe wird gelöst, in dem die Schnecke des Schneckentriebes mit wenigstens zwei achsparallelen Schneckenrädern in einer zur Drehachse der Schnecke symmetrischen Anordnung in Eingriff steht.

Durch die erfindungsgemäße Konfiguration des Schneckentriebes werden die durch die in Eingriff mit der Schnecke auftretenden Kräfte weitgehend aufgehoben. Dadurch wird der bislang auf Biegung beanspruchte Motorzapfen nur noch durch das zu übertragende Drehmoment belastet, nicht jedoch durch Kräfte senkrecht zu seiner Drehachse.

In einfachster Ausführung läßt sich die Erfindung konstruktiv umsetzen, wenn die Schnecke mit zwei Schneckenrädern in Eingriff steht, deren Drehachse um einen Winkel von 180° Grad zueinander versetzt sind. Die Schneckenräder liegen dann in einer Ebene. Außerdem wird bei dieser Ausführung die Anzahlt der Bauteile gering gehalten. Je nach Einsatzzweck kann es erforderlich werden, daß der elektromotorische Linearantrieb in einer Drehrichtung der Antriebsspindel selbsthemmend ist. Dies kann beispielsweise notwendig sein, wenn ein an die Spindelmutter angeschlossenes Bauteil mittels des Linearantriebes angehoben wird und das angeschlossene Bauteil in der jeweiligen Stellung nach Abschalten des Elektromotors verbleiben soll. Um diese Forderung zu erfüllen, ist vorgesehen, daß jedes Schneckenrad mit einem Stirnrad verbunden ist, welches mit dem Stirnrad des anderen Schneckenrades in Eingriff steht. Durch diese Anordnung wird ein Doppelschneckenstirnradgetriebe geschaffen, welches selbsthemmend ist, da der Gesamtwirkungsgrad durch die beiden Stirnräder herabgesetzt wird. Die Teilkreise der beiden Stirnräder sind größer als die Außendurchmesser der Schneckenräder und berühren sich in der Ebene der Drehachse der Schnecke. Darüber hinaus wird durch eine derartige Gestaltung erreicht, daß sich das Gesamtdrehmoment, welches durch die Schnecke eingeleitet wird, auf zwei oder mehr Schneckenräder verteilt. Dadurch kann ein solches Getriebe ein deutlich größeres maximales Drehmoment übertragen als ein herkömmliches Schneckengetriebe.

Um die Montage zu vereinfachen und die Anzahl der Teile gering zu halten, ist es zweckmäßig, wenn jedes Schneckenrad mit dem zugehörigen Stirnrad als einstückiges Formteil ausgebildet ist. Die Verzahnungen der Stirnräder können Gerad- oder Schrägverzahnungen sein. Zur optimalen Lagerung der Schneckenräder und der Stirnräder ist vorgesehen, daß an jedem Schneckenrad und dem zugehörigen Stirnrad ein vorstehender Lagerzapfen angeformt ist, auf den jeweils ein Wälzlager oder ein Gleitlager aufgesetzt ist. Die gesamte Räderanordnung wird dann an vier Stellen gelagert, so daß eine in sich stabile Anordnung geschaffen ist.

Anhand der beiliegenden Zeichnungen wird die Erfindung noch näher erläutert.

Es zeigen:

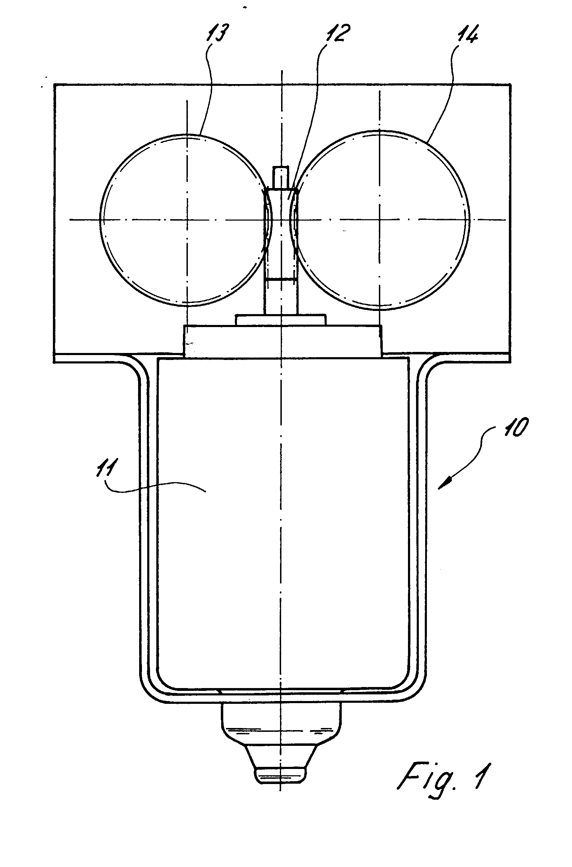

- Figur 1: Den erfindungsgemäßen elektromotorischen Linearantrieb in einer Daraufsicht, rein schematisch und

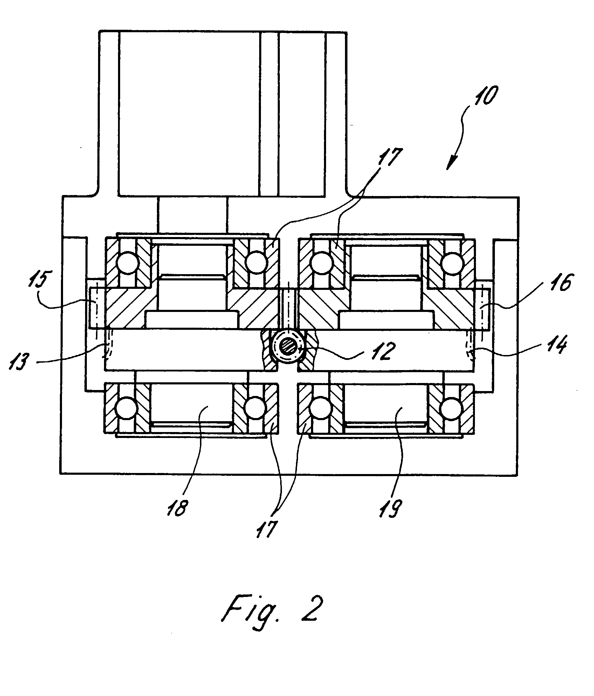

- Figur 2: den Linearantrieb nach der Figur 1 in einer Schnittdarstellung, quer zur Längsachse der Schnecke. Der in der Figur 1 dargestellte elektromotorische Linearantrieb 10 besteht aus einem nicht näher erläuterten Elektromotor 11, dessen Abtriebszapfen als Schnecke 12 ausgebildet ist, zwei mit der Schnecke 12 in Eingriff stehenden Schneckenrädern 13, 14 und zwei mit den Schneckenrädern 13, 14 verbundenen Stirnrädern 15, 16. Entgegen der Darstellung nach der Figur 1 könnte die Schnecke 12 auch drehfest auf den Abtriebszapfen aufgekeilt sein. Die Schnecke 12 ist aus Stahl gefertigt, während die Schneckenräder 13, 14 und die Stirnräder 15, 16 aus Kunststoff bestehen. Im dargestellten Ausführungsbeispiel bildet das Schneckenrad 13 mit dem Stirnrad 15 und das Schneckenrad 14 mit dem Stirnrad 16 ein einstückiges Formteil. Dadurch wird außerdem eine kompakte Bauweise erreicht. Wie die Figur 2 zeigt, ist der Teilkreisdurchmesser jedes Stirnrades 15, 16 größer als der Außendurchmesser jedes Schneckenrades 13, 14, so daß die beiden Stirnräder 15, 16 in Eingriff stehen. Der Teilkreis jedes Stirnrades 15, 16 liegt tangential zu der Mittel-Längs-Ebene der Schnecke 12. Jedes Schneckenrad 12, 13 ist an der dem Elektromotor 11 zugewandten Seite mit einem Zapfen 18, 19 versehen. Jedes Stirnrad 15, 16 ist an der dem Elektromotor 11 abgewandten Seite ebenfalls mit einem Zapfen versehen. Auf diese Zapfen sind insgesamt vier Wälzlager 17 aufgeschoben. Die Zapfen 18, 19 und die Schneckenräder 13, 14 und die Stirnräder 15, 16 sind ein einstückiges Formteil, welches aus Kunststoff gespritzt ist.

In nicht dargestellter Weise erfolgt der Antrieb des Linearantriebes 10 durch eine Gewindespindel, die entweder mit einem Stirnrad 15, 16 sowie gegebenenfalls auch mit dem zugehörigen Schneckenrad 13 oder 14 drehfest verbunden ist.

Die Erfindung ist nicht aufdas dargestellte Ausführungsbeispiel beschränkt, da es wesentlich ist, daß der Schnecke 12 wenigstens zwei Schneckenräder in einer symmetrischen Anordnung zugeordnet sind, um die Biegekraft zu neutralisieren. Im dargestellten Ausführungsbeispiel sind die Drehachsen der Schneckenräder 13, 14 um einen Winkel von 180° Grad zueinander versetzt. Bei mehr als zwei Schneckenrädern ändern sich diese Winkel entsprechend.

## Patentansprüche

1. Elektromotorischer Linearantrieb, insbesondere Möbelantrieb mit einer rotierend antreibbaren Spindel auf die eine das Abtriebsglied bildende und gegenüber einer Verdrehung gesicherte Spindelmutter aufgesetzt ist, und mit einem Schneckentrieb, dessen Schnecke auf den Motorzapfen eines Elektromotors aufgekeilt ist, **dadurch gekennzeichnet**, daß die Schnecke (12) des Schneckentriebes mit wenigstens zwei achsparallelen Schneckenrädern (13, 14) in einer zur Drehachse der Schnecke (12) symmetrischen Anordnung in Eingriff steht.

2. Elektromotorischer Linearantrieb nach Anspruch 1, **dadurch gekennzeichnet**, daß die Schnecke (12) mit zwei Schneckenrädern (13, 14) in Eingriff steht, deren Drehachsen um einen Winkel von 180° Grad zueinander versetzt sind.

3. Elektromotorischer Linearantrieb nach Anspruch 1 oder 2, **dadurch gekennzeichnet**, daß jedes Schneckenrad (13, 14) mit einem Stirnrad (15, 16) verbunden ist, welches mit dem Stirnrad des anderen Schneckenrades in Eingriff steht.

4. Elektromotorischer Linearantrieb nach einem oder mehreren der vorhergehenden Ansprüche 1-3, **dadurch gekennzeichnet**, daß jedes Schneckenrad (13, 14) mit dem zugehörigen Stirnrad (15, 16) als ein einstückiges Formteil ausgebildet ist.

5. Elektromotorischer Linearantrieb nach einem oder mehreren der vorhergehenden Ansprüche 1-4, **dadurch gekennzeichnet**, daß die Teilkreisdurchmesser der Stirnräder (15, 16) größer sind, als die Außendurchmesser der Schneckenräder (13, 14).

6. Elektromotorischer Linearantrieb nach einem oder mehreren der vorhergehenden Ansprüche 1-5, **dadurch gekennzeichnet**, daß an jedem Schneckenrad (13, 14) und jedem Stirnrad (15, 16) ein Lagerzapfen angeformt ist, auf den jeweils ein Wälz- oder Gleitlager (17) aufgesetzt ist.

7. Elektromotorischer Linearantrieb nach einem oder mehreren der vorhergehenden Ansprüche 1-6, **dadurch gekennzeichnet**, daß die Schneckenräder (13, 14) und die Stirnräder (15, 16) aus Kunststoff im Spritzverfahren hergestellt sind.

8. Elektromotorischer Linearantrieb nach einem oder mehreren der vorhergehenden Ansprüche 1-7, **dadurch gekennzeichnet**, daß der Abtrieb des Linearantriebes (10) mittels einer Gewindespindel erfolgt, welche drehfest mit einem Sitrnrad (15, 16) und gegebenenfalls mit einem Schneckenrad (13, 14) verbunden ist.
